# EUROPEAN PATENT SPECIFICATION

(11) **EP 2 559 956 B1**
(45) Date of publication and mention of the grant of the patent: **09.07.2014**
(21) Application number: 11177705.8
(22) Date of filing: 16.08.2011
(51) Int. Cl.: F24J 2/46

(54) **Transferring device for transferring a service robot for solar modules**
Transportvorrichtung zum Transport eines Wartungsroboters für Solarmodule
Dispositif de transfert pour le transfert d'un robot d'entretien pour modules solaires

(43) Date of publication of application: 20.02.2013
(73) Proprietor: Manu Systems AG, 93053 Regensburg-Graß (DE)
(72) Inventor: Johansen, Søren Peter, 5792 Aarslev (DK); Monkman, Gareth, 93053 Regensburg (DE); Schumm, Michael, 96114 Hirschaid (DE); Treiber, Daniel, 94359 Loitzendorf (DE); Patzak, Adrian, 81541 München (DE); Kilbertus, Sebastian, 93105 Tegernheim (DE)
(74) Representative: Hannke, Christian

(56) References cited:
- EP-A1- 2 366 964
- DE-A1-102009 054 160
- US-A1- 2010 206 294
- US-A1- 2011 137 458

## Description

The invention relates to a transferring device for transferring a service robot, in particular a cleaning and inspection device for the surface cleaning of a plurality of solar modules arranged in rows and at a first angle to the horizontal, according to the preamble of claim 1, the solar modules being arranged in a plurality of rows extending parallel to one another and at a distance from one another.

Solar modules are usually arranged at an angle with respect to the horizontal on the ground or on roofs in order to obtain an optimized solar radiation. Consequently, the solar modules are inclined with respect to the horizontal and make it difficult to clean solar module surfaces which are frequently subjected to contamination. Contamination in this way can be for example the deposition of pollen, of sand and soil particles after windy weather or after a storm has occurred. By way of example, in desert regions after a sandstorm a plurality of sand deposits can be present on solar modules of this type which are arranged one beside the other in both directions. Sand deposits of this type are deposited differently with respect to the area of the solar modules. In addition, these sand deposits can have different deposit heights.

Contamination in this way results in the solar modules being reduced in their efficiency with respect to the current yield which occurs as the result of the solar radiation in the case of solar modules of this type comprising solar cells. Such reductions in efficiency can frequently amount to from 2 to 70 % of the efficiency as a whole.

The solar modules are usually arranged adjacent to one another in different rows and the rows extend parallel to one another. The rows extending parallel to one another are, in addition, spaced at a distance from one another locally, so that cleaning device which are present on the surfaces of the solar modules, either must be acquired separately for each row or must be transferred by hand from one row to the other row. This is burdensome as a rule for the person involved, since the cleaning device are device having a considerable weight. In addition, the cleaning device have to be changed over at the correct moment in order to obtain as rapid as possible a cleaning of the surfaces of all the rows after contamination has occurred, since otherwise the efficiency will be reduced for an undesired length of time.

Although there are device which permit transferring of the cleaning device from one row of solar modules to the other row of solar modules, device of this type are nevertheless provided with a complicated structure which is attached to the individual rows of solar modules. This has the consequence that structures of this type are time-consuming and expensive in their design and, in addition, comprehensive stabilization measures are necessary on the basic structures of the individual rows of solar modules in order to have the connecting structures permanently available. On the other hand, if connecting structures of this type are not present, then the movement of the cleaning device by hand, which is absolutely necessary, runs the risk of injury to individual persons during the transferring.

US-A-20110137458 discloses a transferring device with a cleaning robot for cleaning surfaces of solar modules.

Consequently the object of the present invention is to make available a transferring device for transferring a service robot, in particular a cleaning device for the surface cleaning of a plurality of solar modules arranged in rows and at an angle to the horizontal, in which an automated transferring from one row of solar modules to the other row of solar modules is possible in a simple manner and without the application of connecting structures between the individual rows of solar modules.

This object is attained according to the features of claim 1.

The core concept of the invention is that, in the case of a transferring device for transferring a cleaning device for the surface cleaning [of] a plurality of solar modules which are arranged in rows and at a first angle to the horizontal and which are arranged in a plurality of rows extending parallel to one another and at a distance from one another, the transferring device is arranged beside a first row and is capable of being moved from the first to the second row in order to transfer the cleaning device from the first to the second row, the transferring device having a transferring plane, which is arranged at the first angle, for receiving and delivering the cleaning device. In this case the transferring device is capable of being moved on a surface of the ground in such a way that the arrangement thereof immediately beside one row renders a connection between the transferring device and the row of solar modules superfluous. In this way, a transferring of a cleaning device which can be removed from the row or delivered from this row laterally, i.e. at a front end of a row of solar modules, can be transferred with the aid of a transferring device of this type to the transferring device with the transferring plane which preferably has the same angular positioning as the solar modules of the row and this transferring device can travel independently of the rows of solar modules from one row to the next one in order to transfer the conveyed cleaning device there laterally or at the front end to the next row again. So that the cleaning device slides/drives along on the surface of the solar modules and the surface of the transferring plane, which is positioned with the same surface level beside the solar module (photovoltaic row) To this end the preferred cleaning device has rollers and/or wheels which can be moved along on the solar modules to a common upper edge region, i.e. the region which is set higher than the lower region as a result of the angular arrangement. These wheels can also be arranged on an inspection unit for inspecting the surfaces of the solar modules, in which case the inspection unit can be connected or not to the cleaning device. In the same way, the cleaning device can be connected to a drive device which has wheels and rollers of this type for travelling along on the upper edge region of the solar modules.

As a result of the fact that the wheels and/or rollers and/or brushes - on which the cleaning device and possibly the drive device and/or the inspection device are suspended - travel along in this way, it is possible to achieve an obstacle-free sliding over the edge region on the front end to the transferring device situated adjacent with the associated transferring plane, without additional structures for connecting the transferring device to the rows of solar modules being required for this.

Cleaning device of this type can, in addition, have at least one substantially cylindrical elongate brush which for cleaning purposes rotates about its longitudinal axis with a direction of rotation capable of being pre-determined and at a rotational speed capable of being pre-determined, in which case the brush eventually extends in the longitudinal axial direction in the direction of the solar modules arranged adjacent to one another, and the brush is connected to the drive device.

The brush of the cleaning device and thus the cleaning device as a whole are moved not only from left to right over all the solar modules of a row, but also back again. It is possible, of course, for a blocking device or a sensor to be arranged at the front ends of the row, in order to prevent the cleaning device from travelling beyond the edge of the row of solar modules in an undesired manner if no transferring device is arranged adjacent thereto.

It is preferable for the transferring device to be equipped in such a way that the transferring plane is adjustable in its inclination by means of at least one actuating member with respect to the horizontal at its first angle and/or at a second angle, in which case a first plane of the first angle is turned through 90° with respect to a second plane of the second angle. In this way it is possible for the transferring plane to be able to be attached - almost completely independently of the position of a lower chassis arranged under it - in the same orientation as the solar modules of the row on which the cleaning device is present, in order to ensure a friction-less sliding or travel over the boundary region between the transferring device and the front end of the row of solar modules.

The at least one actuating member extends between the lower chassis on the ground and the transferring plane situated above it and it is connected to them. In this case the lower chassis is usually provided on the underside with wheels or tracks, in order to be capable of being moved along on the terrain, such as for example a meadow, and to move the cleaning device from one row to the next row. As soon as the transferring device has arrived at the front end of the next row, a likewise automated and/or manual setting of the angle and the height of the transferring plane is carried out in order to adapt to the orientation of the planes of the solar modules of this row, in order to be able to transfer the cleaning device from the transferring device without friction to the solar modules.

The transferring device may park with a gap next to the row, if the service robot (in particular the cleaning device) can bridge gaps of a certain distance, e.g. 15 cm. The sensors, which are necessary in order to detect the parked transferring device in the right position, can work with a lower accuracy in case of keeping a gap. Further, by using a gap the safety is increased, since the solar modules cannot be damaged.

It is preferable for the transferring plane to be designed substantially in the form of a square plate, by the corner points of which an actuating member for the vertical adjustment of the corner points is connected in each case to the transferring plane, each actuating member being connected to the lower chassis. By the use of four actuating members an uncomplicated and precise orientation and vertical adjustment of the transferring plane, in this case the plate, to a plane of the surfaces of the solar modules of the new row can be achieved.

In accordance with a preferred embodiment a roof for covering the cleaning device arranged on the transferring plane is arranged above the transferring plane. This roof can be used not only as a protection from the sun during the day, since the service robot, in particular the cleaning device then usually stops on the transferring device and carries out no service as inspection and/or cleaning, but also for the arrangement of solar cells which can be used for the generation of power for the charging procedure of a battery. Solar cells of this type can also be provided in the event of the absence of a roof on the transferring plane, such as for example the plate described above.

The battery is used to ensure a power supply on the transferring device. On the one hand this power supply can be used for charging the cleaning device during the stay thereof on the transferring device. On the other hand the power generation or supply by means of the accumulator or the battery can be used to keep activated a control device of the transferring device, which is provided primarily to ensure an almost precise or accurate travel of the transferring device from one row to the other row as a navigation system and communication system. To this end the transferring device can communicate with central control devices which are connected to a global positioning system, and also with the cleaning device itself which is used to call up the transferring device so as subsequently to cause the cleaning device to move from one row of solar modules to the next row of solar modules after the service such as cleaning and/or inspection of the former row of solar modules has been carried out.

The service such as cleaning and/or inspection of the surfaces of the solar modules is preferably carried out at night, so that the service of the PV modules (solar modules) does not shade the PV modules and so that the service device as an electrical system does not interfere with an active PV power plant under high voltage. The cleaning device can be positioned in the shade on the transferring device during the day and can be charged again in the transferring device by means of the power generated.

In the design of a roof, wall elements can be additionally arranged between the roof and the actual transferring plane in order to make available a sort of service robot for the service robot, in particular the cleaning device. This permits an additional protection for the cleaning device both with respect to the winds which occur and with respect to the solar radiation.

In accordance with a further embodiment of the invention the transferring plane is provided with at least two strip-like plates extending in the longitudinal direction of the rows in order to roll off rolling elements - attached to the underside - of the cleaning device, with which the cleaning device moves on the surfaces of the solar modules, during the reception and delivery of the cleaning device on them. In addition, a sort of continuation of the upper edge region of the solar modules by rails can advantageously be provided on the transferring device, in order to allow the rollers or wheels on which the cleaning device is suspended on the upper edge region to pass guided in the same way onto the transferring device. To this end it is necessary for the rail-like elements to be positioned at the front end precisely on the front end of the upper edge region of the solar modules when the transferring device is moved at the front end to beside the row of solar modules.

The vertical and angular setting of the transferring plane can be carried out in an automated manner with suitable sensors. In this case it is possible for use to be made of both the contact sensors and the transmission and reception sensors as ultrasonic sensors which can be attached on both sides, i.e. on the row of solar modules and on the transferring device.

In addition, the navigation system for the accurate travel from the first row to the second one can be arranged in the transferring device, in which case the communication device is provided for the wireless communication and data exchange of the transferring device to the service robot with services such as cleaning and inspection.

The transfer device can comprise an electric driven vehicle preferably a rugged autonomous transfer vehicle. Also, vehicles with combustion engines are possible. There is no need to any major structural modifications to the plane such as tracks, railway systems or a fixed bridge installation between solar module rows. Also, no arm or similar device is needed at the transfer device to grap and place the service robot. However, it is possible to fix any guidance of the vehicle on a defined path and/or by external landmarks in order to drive the vehicle on a specific way.

The transfer device and transfer vehicle respectively must be able to move on rough and comparatively unknown solid grounds including grass or other plants with a height of up to 1 m. The transfer vehicle should not damage the photovoltaic power plant.

In principle, the inventive transfer device can be used for each kind of this robot according to the state of the art, e.g. for robot systems which move in two dimensions over the surface of the solar module.

In case of using any navigation systems for directing the service robot, in particular the cleaning device on the plane of the transfer device and backward, GPS systems can be used.

Also as navigation systems can be used laser scan systems or cameras (also during the night).

Further advantageous embodiments are set out in the sub-claims.

Advantages and expedient features are evident from the accompanying description in conjunction with the drawing. In the drawing
- Figure 1: is a first diagrammatic illustration of two rows of solar modules with a transferring device according to the invention;
- Figure 2: is a diagrammatic illustration of the transferring device according to the invention in accordance with a first embodiment of the invention;
- Figure 3: is a diagrammatic illustration of the transferring device according to the invention in accordance with a second embodiment of the invention, and
- Figure 4: is a block circuit diagram of a possible control system for the transferring device according to the invention which is in communication with further device.

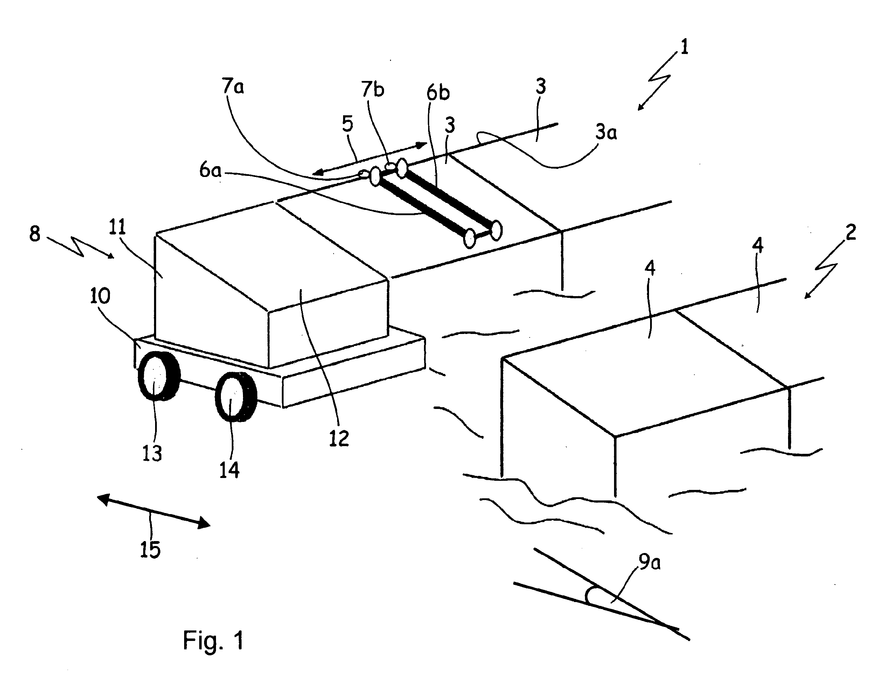

Two rows of solar modules together with the transferring device according to the invention are reproduced in a diagrammatic illustration in figure 1. The two rows (1, 2) of solar modules are arranged parallel to each other and are spaced at a distance from each other. The two rows have solar modules (3, 4) which are arranged adjacent to one another and their surfaces are situated on the same plane.

A cleaning device (6a, 6b; 7a, 7b) is suspended by rollers (7a, 7b) attached on the top side to an upper edge region (3a) of the solar modules (3) in such a way that the cleaning device can be moved in a stable manner along the longitudinal direction (5) of the row on account of its gravity. In this case it should be noted that the solar modules (3, 4) are arranged at a first angle (9a) with respect to the horizontal and, in this way, the weight force of the cleaning device allows the suspension at the top side by means of the rollers (7a, 7b) on the upper edge region (3a) of the solar modules (3).

In this case the cleaning device has two cylindrical brushes (6a, 6b) which extend almost beyond the entire width direction of row 1 of the solar modules and which can be rotated about their longitudinal axis and are intended to cause the surfaces of the solar modules to be freed from contamination.

As soon as the service robot, in particular the cleaning device has ended its service procedures, as the cleaning procedure, a signal is sent to a control system of a transferring device (8) which comprises a lower chassis (10) with wheels (13, 14) and an upper chassis (11). The transferring device is then, if it has not yet moved to row 1, moved to row 1 in an automated and/or manual manner and is brought to the same plane as the surfaces of the solar modules (3) by means of a vertical and angular adjustment in its transferring plane (12). A friction-less transfer on the cleaning device (6a, 6b; 7a, 7b) to the transferring plane (12) of a transferring device (8) can now be carried out by the transferring device (8) moving beside it, in that the cleaning device moves itself to the left on the transferring plane (12) in the longitudinal direction (5) of the row.

After that, a movement of the lower chassis (10) takes place in an automated and/or manual manner from row 1 to row 2 in order to carry out an adjustment of the transferring plane (12) to the surfaces of the solar modules (4) after that. After the adjustment of the transferring plane (12) with respect to the angular setting and the vertical setting has been carried out, the cleaning device can be delivered from the transferring device to the surfaces of the solar modules (4) again and can be transferred. Transferring of the cleaning device on the transferring device (8) takes place in the direction of the arrow (15).

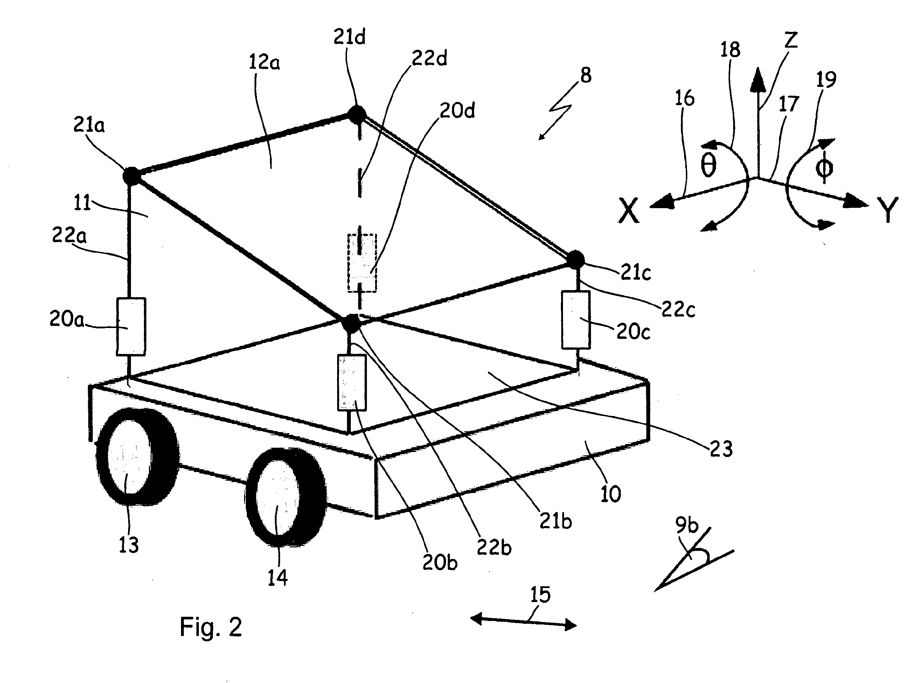

A transferring device according to the invention is shown in accordance with a first embodiment of the invention in a diagrammatic illustration in figure 2. The same parts and parts with the same significance are provided with the same reference numbers.

It is evident from this illustration that the transferring device (8) has as the transferring plane a plate (12a) on the surface of which the cleaning device can be received.

The transferring plane or the plate (12a) respectively can be set both vertically and at the angles by means of actuating members or actuators (20a, 20b, 20c and 20d). This is made clear by the fact that an angular setting according to the double arrow (18), which corresponds to the first angle (9a), is possible along an x axis (16), and an angular setting according to the double arrow (19), which corresponds to the second angle (9b), is possible along a y axis (17). In addition, a rotation of the plate (12a) about an axis Z can take place by means of these actuating members (20a to 20d).

It is advantageous for the actuating members (20a to 20d) to be arranged between a lower plane (23) of a lower chassis (10) in the corner regions of the square shape of the plate (12), so that the actuating members (20a to 20d) extend between the lower plane (23), i.e. the lower chassis (10), and the upper corner points (21 a, 21 b, 21c, 21d) of the square plate (12). In this way, for example these actuating members are tied into lateral braces (22a, 22b, 22c, 22d) extending vertically.

Connecting means (21a, 21b, 21c, 21d) in the manner of balls or spheres make it possible to influence the angular adjustment and rotation of the plate (12a) with respect to the lower chassis (10) but without influencing the stability of the structure as a whole in a decisive manner. To this end the sphere-like joints (21a to 21 d) can alter the position of the braces connected thereto in all three degrees of freedom.

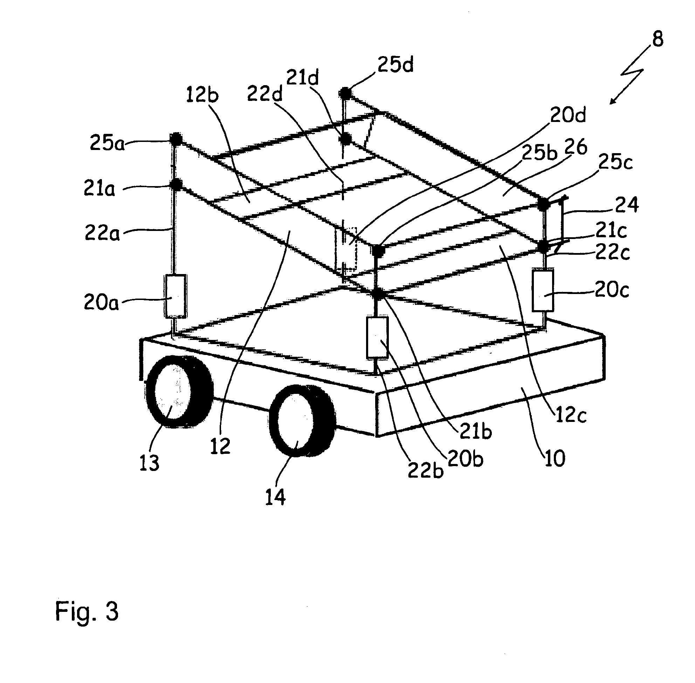

The transferring device according to the invention is shown in accordance with a second embodiment of the invention in a diagrammatic illustration in figure 3. The same parts and parts with the same significance are provided with the same reference numbers.

It is evident from the illustration reproduced in figure 3 that the transferring device (8) additionally has a roof (26) and optionally lateral walls between the roof (26) and the transferring plane (12) situated under it. This is used primarily for protecting the cleaning device situated between the latter against wind and sun as well as from contamination.

The roof is preferably arranged at a distance (24) from the transferring plane (12) in such a way that the cleaning device can be positioned in an adequate manner between them.

In this case the transferring plane (12) is provided with two strip-like plates (12b, 12c) on which rolling elements of the cleaning device, which are used for moving the cleaning device over the surface of the solar modules, can be moved along. If these strip-like plates have lateral edges directed upwards in their upper or lower edge regions, even a precise and stable positioning of the rolling elements and thus of the cleaning device can take place on the two strip-like plates (12b, 12c).

The roof (26) is attached by means of further sphere-like joints (25a, 25b, 25c, 25d) to the braces (22a, 22b, 22c, 22d), so that the roof can likewise participate in the necessary angular settings and vertical setting during movement.

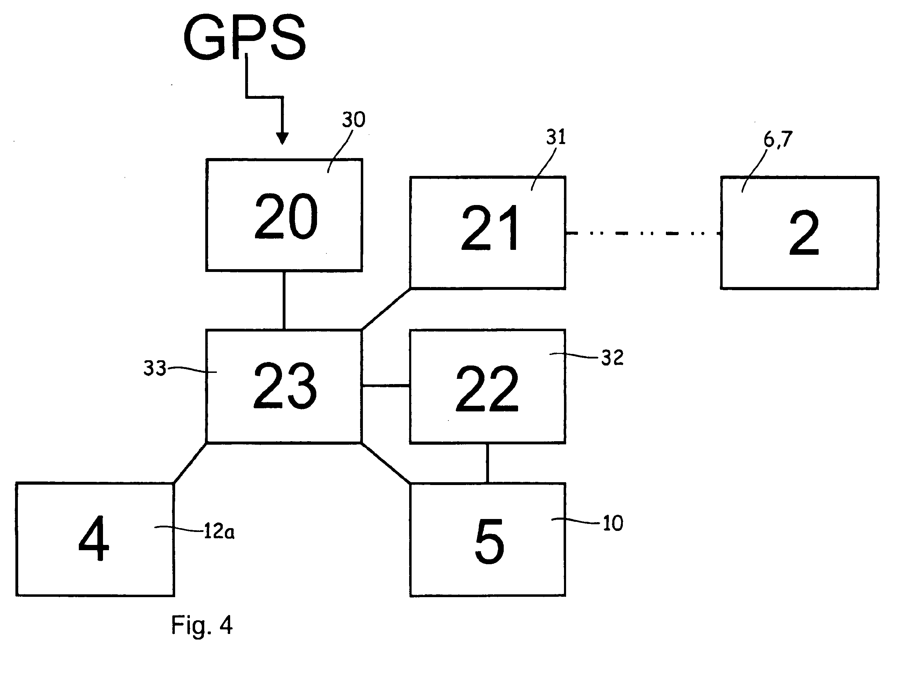

Both the roof (26) and the plate (12a) reproduced in figure 2 can be provided with solar cells in order to provide a power supply which is necessary for example for an accumulator ora battery of the transferring device for supplying a control system as shown in figure 4.

A control system for the transferring device is reproduced in a diagrammatic illustration in figure 4. It is evident from this illustration that a navigation system (30) is used to direct the transferring device in an automated manner from one row to the next row by means of satellite guided navigations as GPS and Galileo, Decca, LORAN or the like. In addition, a communication device (31) is provided which is used to maintain a preferably wireless communication between the cleaning device and the control system of the transferring device. This can result in the cleaning device requiring the transferring device for an upcoming transferring or controlling the orientation of the transferring device with respect to the rows of the solar modules.

The navigation system (30) can be implemented not only by means of GPS, but in addition or instead of this by means of distributed sensors which communicate between the rows of the solar modules or the cleaning device and the transferring device. Sensors of this type can also communicate in a manner based upon infrared, acoustic, optical or similar technology. For these sensors there is a sort of sensor control device (32) which processes a plurality of distance measurement sensors in their data for the fine positioning between the transferring device with respect to the rows of the solar modules. Both the sensor control device (32) and the communication device (31) and the navigation system (30) communicate with an on-board computer or a central control device (33), such as for example a map of the entire solar plant, which can have its memory in an electronic form. In this way, the transferring device can be controlled from row of solar modules to row of solar modules. In the same way, both the central control device (33) and the sensor control device (32) communicate with the lower chassis (10) which is used for moving the transferring device in a controlled manner. In addition, the central control device (33) communicates with the transferring plane (12) or a plate (12a) in order to carry out the angular adjustment and the vertical adjustment of the transferring plane with respect to the surfaces of the rows of the solar modules in an automated manner.

A plurality of transferring devices can be controlled and/or operated by a central control centre by means of teleoperation. By using such teleoperation it is not required to have humans on-side.

In addition, a communication as already described takes place between the communication device (31) and the transferring device (6, 7).

The transfer device is capable to transfer or convey any kind of service robot, which can include a cleaning device for the surface cleaning. The service robot can also contain inspection units for inspecting the surface of the solar modules or an intruder alert unit. This means that the transfer device can be used for any kind of service robot.

### List of reference

- 1: row of the solar modules
- 2: row of the solar modules
- 3: solar module
- 3a: upper edge region
- 4: solar module
- 5: longitudinal direction of the row
- 6a: cleaning device, brush
- 6b: cleaning device, brush
- 7a: cleaning device, roller applied
- 7b: cleaning device, roller applied
- 8: transferring device
- 9a: first angle
- 9b: second angle
- 10: lower chassis
- 11: upper chassis
- 12: transferring plane
- 12a: strip-like plate
- 12b: strip-like plate
- 13: wheel
- 14: wheel
- 15: arrow
- 16: x axis
- 17: y axis
- 18: double arrow
- 19: double arrow
- 20a: actuating member
- 20b: actuating member
- 20c: actuating member
- 20d: actuating member
- 23: lower plane
- 21 a: upper corner point, sphere-like joint
- 21 b: upper corner point, sphere-like joint
- 21c: upper corner point, sphere-like joint
- 21d: upper corner point, sphere-like joint
- 24: distance
- 25a: sphere-like joint
- 25b: sphere-like joint
- 25c: sphere-like joint
- 25d: sphere-like joint
- 26: roof
- 30: navigation system
- 31: communication device
- 32: sensor control device
- 33: control device

## Claims

1. Combined transferring device and service robot, in particular a cleaning device (6a, 6b; 7a, 7b) wherein the transferring device is configured to move from one row of solar modules to another row of solar modules said solar modules are arranged at a first angle (9a) to the horizontal and the service robot is configured to move itself from a transferring plane (12) of the transferring device to a surface of a first solar module (3, 4) in a row of solar modules and vice versa, and wherein vertical and angular adjustment means are provided for bringing the transferring plane to the same plane as the surfaces of the solar modules at the first angle (9a) to the horizontal, whereby at the first angle (9a) to the horizontal the transferring device (8) can be arranged beside and at a front end of a first row (1) and is capable of being moved from the first to the second row (2) in order to transfer the service robot (6a, 6b; 7a, 7b) from the first to the second row (1, 2).

2. A combined transferring device and service robot according to claim 1, **characterized in that** the transferring device (8) is capable of being moved on a surface of the ground in such a way that the arrangement thereof immediately beside one row (1, 2) renders a connection between the transferring device (8) and the row (1, 2) of solar modules (3, 4) superfluous.

3. A combined transferring device and service robot according to claim 1 or 2, **characterized in that** the transferring plane (12) is adjustable in its inclination by means of at least one actuating member (20a, 20b, 20c, 20d) with respect to the horizontal at its first angle (9a, 18) and/or at a second angle (9b, 19), wherein a first plane of the first angle (9a, 18) is turned through 90° with respect to a second plane of the second angle (9b, 19).

4. A combined transferring device and service robot according to claim 3, **characterized in that** the at least one actuating member (20a to 20d) is arranged between a lower chassis (10) on the ground and the transferring plane (12, 12a) situated above it and it is connected to them.

5. A combined transferring device and service robot according to any one of the preceding claims, **characterized in that** the transferring plane (12) is designed substantially in the form of a square plate (12a). by the corner points (21 a to 20d) of which an actuating member (20a to 20d) for the vertical adjustment of the corner points (21 a to 21 d) is connected in each case [to] the transferring plane (12), wherein each actuating member (20a to 20d) is connected to the lower chassis (10).

6. A combined transferring device and service robot according to any one of the preceding claims, **characterized in that** a roof (26) for covering the cleaning device (6a, 6b; 7a, 7b) arranged on the transferring plane (12) is arranged above the transferring plane (12).

7. A combined transferring device and service robot according to claim 6, **characterized in that** the roof (26) and/or the transferring plane (12) is or are provided with solar cells for the generation of power for a charging procedure of a battery.

8. A combined transferring device and service robot according to any one of claims 1 to 4, **characterized in that** the transferring plane (12) is provided with at least two strip-like plates (12b, 12c) extending in the longitudinal direction (5) of the rows in order to roll off rolling elements - attached to the underside - for the cleaning device (6a, 6b; 7a, 7b) during the reception and delivery of the cleaning device (6a, 6b; 7a, 7b) on them.

9. A combined transferring device and service robot according to any one of the preceding claims, **characterized in that** the transferring device (8) is capable of being moved accurately from the first to the second row (1, 2) by means of a navigation system (30).

10. A combined transferring device and service robot according to any one of the preceding claims, **characterized by** a communication device (31) for the wireless communication of the transferring device (8) with the cleaning device (6a, 6b; 7a, 7b).

11. A combined transferring device and service robotaccording to claim 1 or 10, is **characterized in that** the navigation system (30) is a GPS system and/or contains at least one camera and/or at least one laser scan system.

12. A combined transferring device and service robotaccording to any of the preceding claims, **characterized in that** the transfer device is driven by an electric device system.

13. A combined transferring device and service robot according to any of the preceding claims, **characterized in that** the lower chassis (10) has at least four wheels or tracks.

14. A combined transferring device and service robot according to any of the preceding claims, **characterized in that** the transferring plane (12) has a rough surface.

15. A combined transferring device and service robot according to any of the preceding claims, **characterized in that** the transferring plane (12) has a quadrangular shape.

## Patentansprüche

1. Kombinierte(r) Transportvorrichtung und Wartungsroboter, insbesondere eine Reinigungsvorrichtung (6a, 6b; 7a, 7b), wobei die Transportvorrichtung konfiguriert ist, um sich von einer Reihe von Solarmodulen zu einer anderen Reihe von Solarmodulen zu bewegen, wobei die Solarmodule in einem ersten Winkel (9a) zur Horizontalen angeordnet sind und der Wartungsroboter konfiguriert ist, um sich selbst von einer Transportebene (12) der Transportvorrichtung zu einer Oberfläche eines ersten Solarmoduls (3, 4) in einer Reihe von Solarmodulen zu bewegen und umgekehrt und wobei vertikale und winkelförmige Einstelleinrichtungen vorhanden sind, um die Transportebene auf die gleiche Ebene wie die Oberflächen der Solarmodule in dem ersten Winkel (9a) zur Horizontalen zu bringen, wodurch die Transportvorrichtung (8) in dem ersten Winkel (9a) zur Horizontalen neben und an einer Stirnseite einer ersten Reihe (1) angeordnet werden kann und geeignet ist, von der ersten Reihe zu der zweiten Reihe (2) bewegt zu werden, um den Wartungsroboter (6a, 6b; 7a, 7b) von der ersten Reihe zu der zweiten Reihe (1, 2) zu transportieren.

2. Ein(e) kombinierte(r) Transportvorrichtung und Wartungsroboter nach Anspruch 1, **dadurch gekennzeichnet, dass**
die Transportvorrichtung (8) geeignet ist, auf einer Bodenoberfläche derart bewegt zu werden, dass die Anordnung davon unmittelbar neben einer Reihe (1, 2) eine Verbindung zwischen der Transportvorrichtung (8) und der Reihe von Solarmodulen (3, 4) überflüssig macht.

3. Ein(e) kombinierte(r) Transportvorrichtung und Wartungsroboter nach Anspruch 1 oder 2,
**dadurch gekennzeichnet, dass**
die Transportebene (12) in ihrer Neigung bezüglich der Horizontalen in ihrem ersten Winkel (9a, 18) und/ oder in einem zweiten Winkel (9b, 19) mit Hilfe von zumindest einem Betätigungselement (20a, 20b, 20c, 20d) einstellbar ist, wobei eine erste Ebene des ersten Winkels um 90° bezüglich einer zweiten Ebene des zweiten Winkels (9b, 19) gedreht ist.

4. Ein(e) kombinierte(r) Transportvorrichtung und Wartungsroboter nach Anspruch 3, **dadurch gekennzeichnet, dass**
das zumindest ein Betätigungselement (20a bis 20d) zwischen einem unteren Chassis (10) auf dem Boden und der Transportebene (12, 12a), welche oberhalb von ihm gelegen ist, angeordnet ist und es mit ihnen verbunden ist.

5. Ein(e) kombinierte(r) Transportvorrichtung und Wartungsroboter nach einem der vorangegangenen Ansprüche,
**dadurch gekennzeichnet, dass**
die Transportebene (12) im Wesentlichen in Form einer quadratischen Platte (12a) gestaltet ist, durch deren Eckpunkte (21a bis 20d), ein Betätigungselement (20a bis 20d) zur vertikalen Einstellung der Eckpunkte (21a bis 21d) in jedem Fall verbunden ist [mit] der Transportebene (12), wobei jedes Betätigungselement (20a bis 20d) mit dem unteren Fahrgestell (10) verbunden ist.

6. Ein(e) kombinierte(r) Transportvorrichtung und Wartungsroboter nach einem der vorangegangenen Ansprüche,
**dadurch gekennzeichnet, dass**
ein Dach (26) zur Abdeckung der Reinigungsvorrichtung (6a, 6b, 7a, 7b), die auf der Transportebene (12) angeordnet ist, über der Transportebene (12) angeordnet ist.

7. Ein(e) kombinierte(r) Transportvorrichtung und Wartungsroboter nach Anspruch 6, **dadurch gekennzeichnet, dass**
das Dach (26) und/ oder die Transportebene (12) mit Solarzellen ausgestattet ist oder sind zur Stromerzeugung für ein Aufladeverfahren einer Batterie.

8. Ein(e) kombinierte(r) Transportvorrichtung und Wartungsroboter nach einem der Ansprüche 1 bis 4,
**dadurch gekennzeichnet, dass**
die Transportebene (12) ausgestattet ist mit zumindest zwei streifenförmigen Platten (12b, 12c), die sich in Längsrichtung (5) der Reihen erstrecken, um rollende Elemente der Reinigungsvorrichtung (6a, 6b; 7a, 7b) - befestigt an der Unterseite - an ihnen abzurollen, während des Empfangs und der Abgabe der Reinigungsvorrichtung (6a, 6b; 7a, 7b).

9. Ein(e) kombinierte(r) Transportvorrichtung und Wartungsroboter nach einem der vorangegangenen Ansprüche,
**dadurch gekennzeichnet, dass**
die Transportvorrichtung (8) geeignet ist, mittels eines Navigationssystems (30) von der ersten Reihe zu der zweiten Reihe (1, 2) präzise bewegt zu werden.

10. Ein(e) kombinierte(r) Transportvorrichtung und Wartungsroboter nach einem der vorangegangenen Ansprüche,
**gekennzeichnet durch**
eine Kommunikationsvorrichtung (31) zur drahtlosen Kommunikation der Transportvorrichtung (8) mit der Reinigungsvorrichtung (6a, 6b; 7a, 7b).

11. Ein(e) kombinierte(r) Transportvorrichtung und Wartungsroboter nach Anspruch 1 oder 10 ist
**dadurch gekennzeichnet, dass**
das Navigationssystem (30) ein GPS-System ist und/ oder zumindest eine Kamera und/ oder zumindest ein Laserscansystem enthält.

12. Ein(e) kombinierte(r) Transportvorrichtung und Wartungsroboter nach einem der vorangegangenen Ansprüche,
**dadurch gekennzeichnet, dass**
die Transportvorrichtung (12) angetrieben wird von einem elektrischen Vorrichtungssystem.

13. Ein(e) kombinierte(r) Transportvorrichtung und Wartungsroboter nach einem der vorangegangenen Ansprüche,
**dadurch gekennzeichnet, dass**
das untere Chassis (10) zumindest vier Räder oder Schienen hat.

14. Ein(e) kombinierte(r) Transportvorrichtung und Wartungsroboter nach einem der vorangegangenen Ansprüche,
**dadurch gekennzeichnet, dass**
die Transportvorrichtung (12) eine raue Oberfläche hat.

15. Ein(e) kombinierte(r) Transportvorrichtung und Wartungsroboter nach einem der vorangegangenen Ansprüche,
**dadurch gekennzeichnet, dass**
die Transportvorrichtung (12) eine vierseitige Form hat.

## Revendications

1. Dispositif de transfert et robot de service combinés, en particulier, dispositif de nettoyage (6a, 6b ; 7a, 7b) dans lequel le dispositif de transfert est configuré pour se déplacer d'une rangée de modules solaires à une autre rangée de modules solaires, lesdits modules solaires sont agencés selon un premier angle (9a) par rapport à l'horizontale et le robot de service est configuré pour se déplacer d'un plan de transfert (12) du dispositif de transfert à une surface d'un premier module solaire (3, 4) dans une rangée de modules solaires et vice versa, et dans lequel des moyens d'ajustement vertical et angulaire sont prévus pour amener le plan de transfert dans le même plan que les surfaces des modules solaires selon le premier angle (9a) par rapport à l'horizontale, moyennant quoi, au premier angle (9a) par rapport à l'horizontale, le dispositif de transfert (8) peut être agencé à côté et à une extrémité avant d'une première rangée (1) et peut être déplacé de la première à la deuxième rangée (2) afin de transférer le robot de service (6a, 6b ; 7a, 7b) de la première à la deuxième rangée (1, 2).

2. Dispositif de transfert et robot de service combinés selon la revendication 1, **caractérisés en ce que** le dispositif de transfert (8) peut être déplacé sur une surface du sol de manière à ce que l'agencement de celui-ci immédiatement à côté d'une rangée (1, 2) rende une connexion entre le dispositif de transfert (8) et la rangée (1, 2) de modules solaires (3, 4) superflue.

3. Dispositif de transfert et robot de service combinés selon la revendication 1 ou 2, **caractérisés en ce que** le plan de transfert (12) est ajustable quant à son inclinaison au moyen d'au moins un élément d'actionnement (20a, 20b, 20c, 20d) par rapport à l'horizontale selon son premier angle (9a, 18) et/ou selon un deuxième angle (9b, 19), dans lequel un premier plan du premier angle (9a, 18) est tourné de 90° par rapport à un deuxième plan du deuxième angle (9b, 19).

4. Dispositif de transfert et robot de service combinés selon la revendication 3, **caractérisés en ce que** ledit au moins un élément d'actionnement (20a à 20d) est agencé entre un châssis inférieur (10) sur le sol et le plan de transfert (12, 12a) situé au-dessus celui-ci et **en ce qu'**il est relié à ceux-ci.

5. Dispositif de transfert et robot de service combinés selon l'une quelconque des revendications précédentes, **caractérisés en ce que** le plan de transfert (12) est conçu sensiblement sous la forme d'une plaque carrée (12a), par les points de coin (21a à 21d) de laquelle un élément d'actionnement (20a à 20d) pour l'ajustement vertical des points de coin (21 a à 21d) est relié dans chaque cas au plan de transfert (12), dans lequel chaque élément d'actionnement (20a à 20d) est relié au châssis inférieur (10).

6. Dispositif de transfert et robot de service combinés selon l'une quelconque des revendications précédentes, **caractérisés en ce qu'**un toit (26) pour recouvrir le dispositif de nettoyage (6a, 6b ; 7a, 7b) agencé sur le plan de transfert (12) est agencé au-dessus du plan de transfert (12).

7. Dispositif de transfert et robot de service combinés selon la revendication 6, **caractérisés en ce que** le toit (26) et/ou le plan de transfert (12) est/sont pourvu(s) de cellules solaires pour la génération d'énergie pour une procédure de charge d'une batterie.

8. Dispositif de transfert et robot de service combinés selon l'une quelconque des revendications 1 à 4, **caractérisés en ce que** le plan de transfert (12) est pourvu d'au moins deux plaques similaires à des bandes (12b, 12c) s'étendant dans la direction longitudinale (5) des rangées afin de mettre en marche des éléments roulants - attachés à la surface inférieure - pour le dispositif de nettoyage (6a, 6b ; 7a, 7b) pendant la réception et la distribution du dispositif de nettoyage (6a, 6b ; 7a, 7b) sur ceux-ci.

9. Dispositif de transfert et robot de service combinés selon l'une quelconque des revendications précédentes, **caractérisés en ce que** le dispositif de transfert (8) peut être déplacé avec précision de la première à la deuxième rangée (1, 2) au moyen d'un système de navigation (30).

10. Dispositif de transfert et robot de service combinés selon l'une quelconque des revendications précédentes, **caractérisés par** un dispositif de communication (31) pour la communication sans fil entre le dispositif de transfert (8) et le dispositif de nettoyage (6a, 6b ; 7a, 7b).

11. Dispositif de transfert et robot de service combinés selon la revendication 1 ou 10, **caractérisés en ce que** le système de navigation (30) est un système GPS et/ou contient au moins une caméra et/où au moins un système de balayage laser.

12. Dispositif de transfert et robot de service combinés selon l'une quelconque des revendications précédentes, **caractérisés en ce que** le dispositif de transfert est entraîné par un système de dispositif électrique.

13. Dispositif de transfert et robot de service combinés selon l'une quelconque des revendications précédentes, **caractérisés en ce que** le châssis inférieur (10) comporte au moins quatre roues ou chenilles.

14. Dispositif de transfert et robot de service combinés selon l'une quelconque des revendications précédentes, **caractérisés en ce que** le plan de transfert (12) a une surface rugueuse.

15. Dispositif de transfert et robot de service combinés selon l'une quelconque des revendications précédentes, **caractérisés en ce que** le plan de transfert (12) a une forme quadrangulaire.
